# EUROPEAN PATENT APPLICATION

(11) **EP 1 236 850 A2**
(43) Date of publication of application: **04.09.2002**
(21) Application number: 02250769.3
(22) Date of filing: 05.02.2002
(51) Int. Cl.: E05B 65/20, F16H 21/06

(54) **Mechanism**

(30) Priority: 02.03.2001 GB 0105120
(71) Applicant: Meritor Light Vehicle Systems (UK) Ltd, Birmingham, West Midlands, B30 3BW (GB)
(72) Inventor: Fisher, Sidney, Solihull, West Midlands, B90 2HB (GB)
(74) Representative: Jones, John Bryn

(57) **Abstract**

A mechanism having an input means (20, 120) and an output means, (30,130) the mechanism having a first condition at which the input and output means are coupled such that the movement of the input means form its first position to its second position causes movement of the output means from its first position to its second position, the mechanism having a second position second condition at which the input means is not couple to the output means, the mechanism further including a blocking means, (50, 150), which, with the mechanism in its second condition, further prevents at least one of the input and output means from moving to its respective second position.

## Description

The present invention relates to mechanism, and particular mechanisms for use within vehicle door latches.

Known vehicle door latches are lockable using a 'free wheeling' principle, thus with the door unlocked, lifting of an outside door handle causes the door latch to open. Conversely with the door locked, lifting of the outside door handle is still possible but the transmission path between the outside door handle and components of the door latch which retain the door in the closed position is broken. Those components on the door handle side of the break are caused to move with the door handle and those components on the other side of the break are not caused to move.

A problem with this type of locking is that space has to be provided for those components on the handle side of the break to move into when the handle is lifted.

Other known door locks include levers which are positioned adjacent to each other and which can be coupled and uncoupled to provide for different functioning of the door lock. However, it has been known for the levers to become artificially coupled as result of dirt and dust ingress or in even rusting of the levers. This has safety implications since the mechanism can be in an apparently uncoupled state whereas in fact actuation of an input lever will cause operation of an output lever. This is particularly so when the mechanism is used as part of a child safety mechanism on a vehicle to prevent a child from inadvertently opening the door.

Thus according to the present invention there is provided a mechanism having an input means, and an output means, the mechanism having a first condition at which the input and output means are coupled such that movement of the input means from its first position to its second position causes movement of the output means from its first position to its second position, the mechanism having a second condition at which the input means is not coupled to the output means, the mechanism further including a blocking means, which, with the mechanism in its second condition, further prevents one of the input or output means from moving to its respective second position.

The invention will now be described, by way of example only, with reference to the accompanying drawings in which:-
FIGURES 1A to 1D show a first embodiment of the present invention in various position;
FIGURES 2A to 2D show a second embodiment of the present invention in various positions;
FIGURE 3 shows an isometric exploded view of figure 2A; and
FIGURES 4A TO 4D and 5A and 5D show isometric views of figure 2A to 2D respectively.

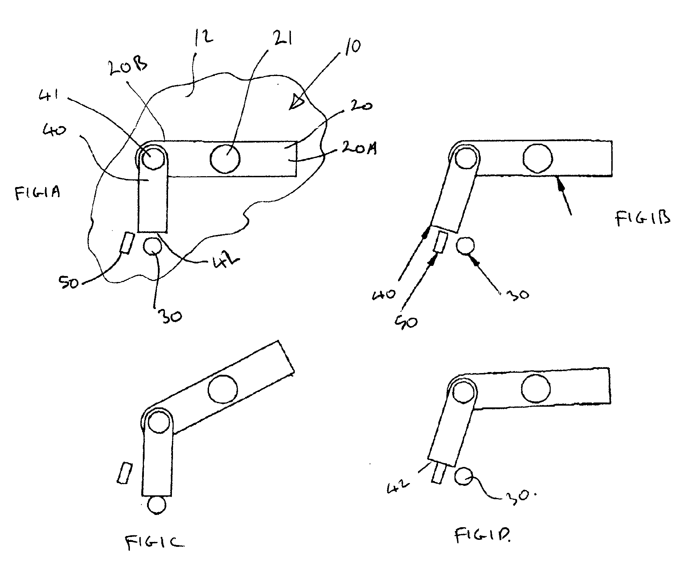

With reference to figures 1A to 1D there is shown a mechanism 10 mounted on a chassis 12 (only shown in figure 1A) the mechanism 10 includes an input means in the form of an input lever 20, an output means in the form of a pin 30, a clutch means in the form of a link 40 and a blocking means 50.

Input means 20 is pivotally mounted at input pivot 21 to the chassis 12.

Link 40 is pivotally mounted at pivot 41 to end 20B of input lever 20.

Blocking means 50 is fixed in a stationary position on chassis 12.

Pin 30 is movable between the position as shown in figure 1A and figure 1C. The mechanism 10 would typically form part of a vehicle door latch arrangement. An inside and outside door handle are connected by a transmission path to end 20A of lever 20. Pin 30 is connected to a pawl which is capable of retaining a latch bolt (e.g. a rotating claw) in a closed position. The claw in turn can releasably retain a latch striker in order to retain an associated door in a closed position. Movement of the pin 30 from the position shown in figure 1A to the position shown in figure 1C causes the pawl to disengage the claw and allow the door to open. Thus with the mechanism in the position as shown in figure 1A the door is in an unlocked condition. Operation of an inside or outside door handle will cause end 20A of lever 20 to lift (i.e. lever 20 will rotate in an anticlockwise direction) causing end 20B to lower which results in abutment 42 contacting and then moving pin 30 to the position shown in figure 1C.

It should be noted that in figure 1A and 1C pivot 41, abutment 42 and pin 30 are all aligned.

The mechanism can be put into a locked condition as shown in figure 1B by rotating the link 40 so that it aligns with blocking means 50 and no longer aligns with pin 30. Thus where an attempt is made to lift the outside door handle abutment 42 moves into contact with blocking means 50 and the outside door handle cannot be fully lifted and the door therefore remains fully closed.

However, thieves and the like tend to apply excessive force to outside door handles in the expectation of failing components of the door latch in an attempt to gain entry to the vehicle. However, the present invention mitigates this problem since in particular in the event that blocking means 50 fails e.g. it breaks off chassis 12, then the abutment 42 will be caused to bypass pin 30 and thus the door still remains closed.

Thus under normal circumstances the abutment 42 does not enter the space occupied by blocking means 50. Thus this space available for other components of the latch, enabling a more compact latch to be designed. Thus typically blocking means 50 would not solely be dedicated to acting just a blocking means, but would fulfil another function within the latch.

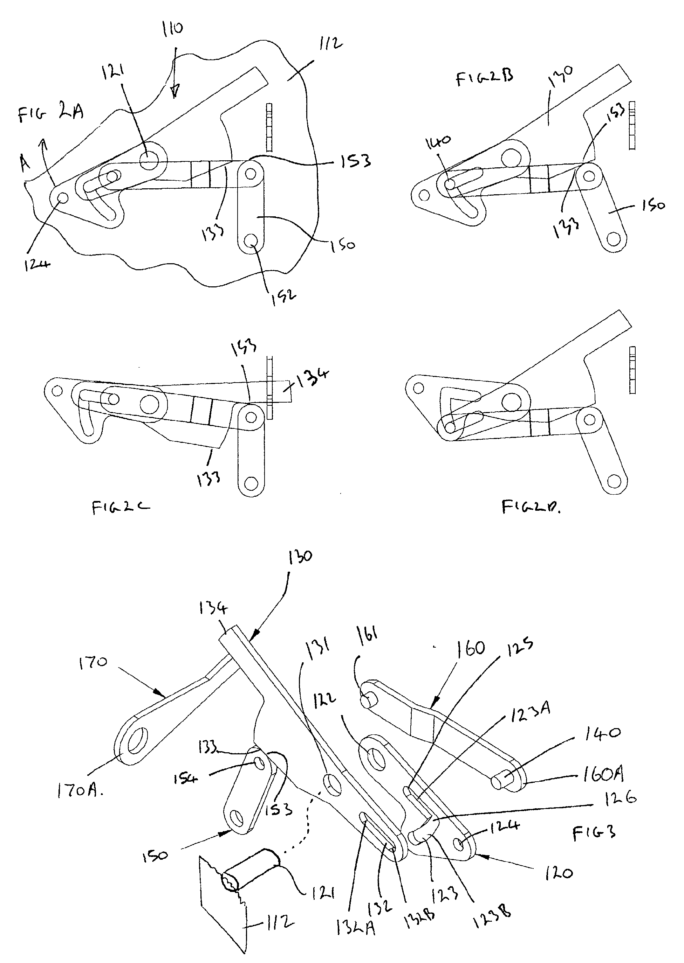

With reference to figures 2A to 5C there is shown a further embodiment of mechanism 110 with components which fulfil substantially the same function as those in latch mechanism 10 labelled 100 greater.

Input lever 120 includes a hole 122 which mounts on input pivot pin 121 which in turn is mounted on chassis 112.

Input lever 120 includes a L shaped hole 123 and a further hole 124 for connection to an inside or outside door handle.

In this case the output means is in the form of a lever 130 having a pivot hole 131 which is mounted on pin 121. Thus it can be seen that the input lever 120 and the output lever 130 lie adjacent to one another and pivot about the same axis. Lever 130 includes a slot 132 which in the position shown in figure 2A substantially aligns with leg 123A of L shaped hole 123. Output lever 130 further includes an abutment 133 and an arm 134.

Blocking means 150 is in the form of a link being pivotally mounted on chassis 112 at pivot 152 and having an abutment 153. Adjacent abutment 153 there is a hole 154 in which is mounted pin 161 of link 160.

Link 160 includes at end 160A clutch means in the form of a pin 140. Pin 140 engages in L shaped hole 123 of the input lever and also in slot 132 of the output lever.

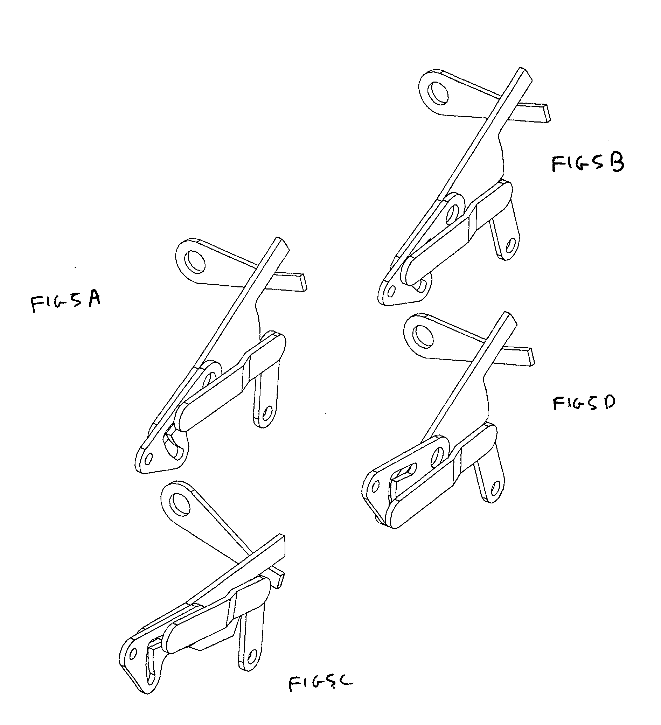

Pawl arm 170 is connected at end 170A to a pawl (not shown) which releasably retains a latch bolt (e.g. a rotating claw) to secure the door. Movement of the pawl arm 170 from the position shown in figure 4A to the position shown in figure 4C causes the pawl to rotate and allow the door to open.

Operation of the mechanism is as follows.

With the mechanism in the position as shown in figures 2A, 3A and 4A the pin 140 is located at end 132A of the slot 132 and hence at end 125 of L shaped hole 123. As such the input and output levers are coupled together for rotation. Further it can be seen from figure 2A that abutment 133 of the output lever is not aligned with abutment 153 of the blocking means (i.e. abutment 133, abutment 153 and pivot 152 are not aligned).

Thus operation of an inside or outside door handle causes hole 124 to move in the direction of arrow A of figure 2A to the position as shown in figure 2C which results in arm 134 rotating pawl arm 170 and thus opening the door. It should be noted that abutment 133 has bypassed abutment 153 when considering figure 2C.

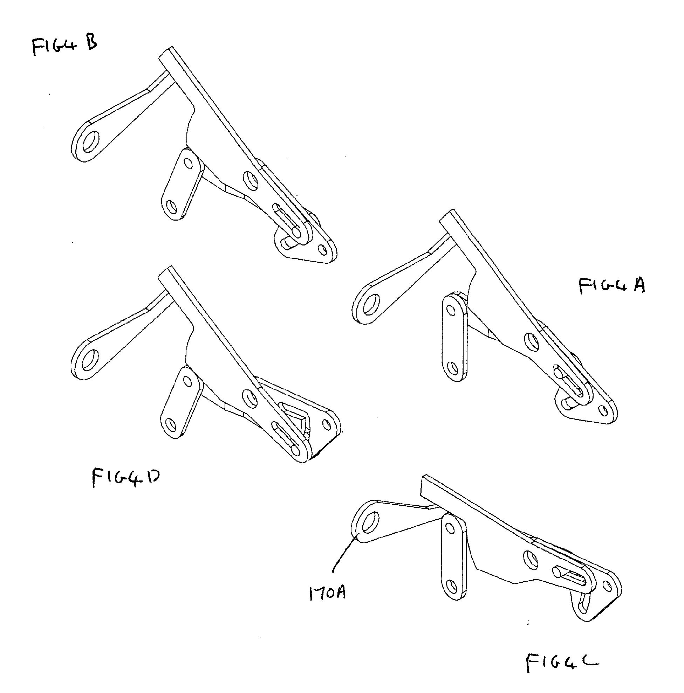

With the input and output levers in the position shown in figure 2A the block means 150 can be rotated to the position as shown in figure 2B. This has two effects namely:-
a) Abutment 153 aligns with abutment 133 (i.e. abutments 153, 133 and pivot 152 are aligned) to prevent movement of output lever 130, and
b) Pin 140 is moved (by link 160) to end 132B of the slot 132 and hence to the confluence of arms 123A and 123B of L shaped hole 123 i.e. to position 126 (see figure 3).

In the event that an inside or outside door handle is operated then movement of the input lever causes arcuate arm 123B of L shaped hole 123 to move past pin 140 which remains stationary. Compare figures 2B and 2D.

In the event that the input and outside levers corrode or otherwise stick together then the door is still prevent from opening by engagement between abutment 133 and 153. Under these circumstances it is not possible to move the associated door handle and this acts as an indicator that the mechanism is malfunctioning. Such an indicator is useful since a malfunction can be determined simply by attempting to operate the door handles and no internal examination of the door is required.

The mechanism can be used in the transmission path between an outside door handle and a latch bolt i.e. it can be used to lock the door.

Alternatively, the mechanism can be used between both the inside and outside door handles and the latch bolt i.e. it can be used to superlock (or deadlock) the door.

Alternatively, it can be used between an inside door and a latch bolt, especially on a rear door of a vehicle, i.e. to provide a child safety function of the door latch.

## Claims

1. A mechanism having an input means (20, 120) and an output means, (30,130) the mechanism having a first condition at which the input and output means are coupled such that the movement of the input means form its first position to its second position causes movement of the output means from its first position to its second position, the mechanism having a second condition at which the input means is not coupled to the output means, the mechanism further including a blocking means, (50, 150), which, with the mechanism in its second condition, further prevents at least one of the input and output means from moving to its respective second position.

2. A mechanism as defined in claim 1 in which the blocking means prevents the input means from moving to its respective second position.

3. A mechanism as defined in claim 1 or 2 in which the blocking means does not prevent the output means from moving to its respective second position.

4. A mechanism as defined in any preceding claim in which the blocking means is stationary.

5. A mechanism as defined in any claims 1 to 3 in which the blocking means is movable.

6. A mechanism as defined in any preceding claim in which the blocking means is abutable by one of the input or output means.

7. A mechanism as defined in any preceding claim in which the input and output means are coupleable by clutch means (40, 140).

8. A mechanism as defined in claim 7 in which the clutch mean (40) rotates to couple/uncouple the input and output means.

9. A mechanism as defined in claim 8 in which the clutch means is pivotably mounted one of the input or output means.

10. A mechanism as defined in claim 8 in which the clutch means (140) translates to couple/uncouple the input and output means.

11. A mechanism as defined in claim 10 in which the clutch means is operably connected to the blocking means such that movement of the clutch means to its coupling position causes the block means to move away from its blocking position and movement of the clutch means to its de-coupling position causes the blocking means to move to is blocking position.

12. A vehicle door latch including a mechanism a defined in any preceding claim.

13. A vehicle door latch as defined in any claim 12 in which the input means is connectable in use to an inside door handle.

14. A vehicle door latch as defined in claim 13 in which the clutch means acts as part of a child safety mechanism.

15. A vehicle door latch as defined in any one of claims 12 to 14 in which the input means is connectable in use to an outside door handle.

16. A vehicle door latch as defined in claim 15 in which the clutch means acts to lock/unlock the door.

17. A vehicle door latch as defined in claim 15 when dependent upon claim 13 in which the clutch means acts as part of superlock (deadlock) mechanism.
